# FASCICULE DE BREVET EUROPEEN

(11) **EP 3 696 449 B1**
(45) Date de publication et mention de la délivrance du brevet: **22.05.2024**
(21) Numéro de dépôt: 20157152.8
(22) Date de dépôt: 13.02.2020
(51) Int. Cl.: F16H 57/04, F16H 57/08

(54) **LUBRIFICATION D'UN PORTE-SATELLITES POUR UN REDUCTEUR MECANIQUE DE TURBOMACHINE, EN PARTICULIER D'AERONEF**
SCHMIERUNG EINES SATELLITENTRÄGERS FÜR EIN MECHANISCHES REDUKTIONSGETRIEBE FÜR TURBOTRIEBWERK, INSBESONDERE EINES LUFTFAHRZEUGS
LUBRICATION OF A PLANET CARRIER FOR A MECHANICAL GEAR OF A TURBINE ENGINE, IN PARTICULAR FOR AN AIRCRAFT

(30) Priorité: 14.02.2019 FR 1901524
(43) Date de publication de la demande: 19.08.2020
(73) Titulaire: Safran Transmission Systems, 92700 Colombes (FR)
(72) Inventeur: SIMON, Adrien, Louis, 77550 MOISSY-CRAMAYEL (FR); CHARRIER, Mathieu, Jean, 77550 MOISSY-CRAMAYEL (FR); DI GIOVANNI, Jean-Charles, Michel, Pierre, 77550 MOISSY-CRAMAYEL (FR); LEFEBVRE, Simon, Loïc, Clément, 77550 MOISSY-CRAMAYEL (FR); ROBINET, Guillaume, Jean, Pierre, 77550 MOISSY-CRAMAYEL (FR)
(74) Mandataire: Gevers & Orès

(56) Documents cités:
- EP-A1- 2 615 335
- EP-A1- 3 657 041
- EP-A1- 3 657 044
- EP-A1- 3 657 045
- EP-A1- 3 657 046
- EP-A1- 3 670 966
- EP-A2- 1 114 949
- EP-A2- 2 844 855
- EP-A2- 3 109 514
- EP-B1- 2 844 855
- WO-A1-2019/016463

## Description

### Domaine technique de l'invention

La présente invention concerne le domaine des réducteurs mécaniques pour des turbomachines en particulier d'aéronef.

### Arrière-plan technique

L'état de l'art comprend notamment les documents WO-A1-2010/092263, FR-A1-2 987 416,FR-A1-3 041 054, EP-A2-3 109 514, EP-B1-2 844 855, EP-A1-2 615 335, WO-A1-2019/016463 et EP-A2-1 114 949.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».

Sur un réducteur planétaire, le porte-satellites est fixe et la couronne constitue l'arbre de sortie du dispositif qui tourne dans le sens inverse du solaire.

Sur un réducteur épicycloïdal, la couronne est fixe et le porte-satellites constitue l'arbre de sortie du dispositif qui tourne dans le même sens que le solaire.

Sur un réducteur différentiel, aucun élément n'est fixé en rotation. La couronne tourne dans le sens contraire du solaire et du porte-satellites.

Les réducteurs peuvent être composés de un ou plusieurs étages d'engrènement. Cet engrènement est assuré de différentes façons comme par contact, par friction ou encore par champs magnétique.

Il existe plusieurs types d'engrènement par contact comme avec des dentures droites, hélicoïdales ou en chevron.

La présente invention propose un perfectionnement d'un réducteur avec une solution simple, efficace et économique pour améliorer la lubrification de son porte-satellites.

### Résumé de l'invention

L'invention présente plusieurs aspects.

Selon un premier aspect, l'invention concerne un porte-satellites pour un réducteur mécanique de turbomachine, en particulier d'aéronef, ce porte-satellites comportant une cage définissant un logement interne destiné à recevoir un solaire central d'axe X de rotation, et une rangée annulaire de satellites disposés autour du solaire, cette cage comportant deux parois annulaires radiales par rapport audit axe X et reliées ensemble à leur périphérie externe par une paroi cylindrique d'axe X, au moins une des parois radiales comportant des orifices de montage d'axes desdits satellites, et la paroi cylindrique comportant des lumières de passage de dentures des satellites pour leur engrènement avec une denture d'une couronne destinée à s'étendre autour des satellites et de la cage, caractérisé en ce qu'il comprend des premier et second circuits de lubrification indépendants, le premier circuit comportant une première entrée dédiée d'huile reliée par une première chambre annulaire d'huile s'étendant autour de l'axe X à des conduites d'amenée d'huile jusqu'auxdits axes des satellites, et le second circuit comportant une seconde entrée dédiée d'huile reliée par une seconde chambre annulaire d'huile s'étendant autour de l'axe X à des canaux d'amenée d'huile jusqu'aux engrènements des dentures des satellites avec la couronne, et en ce que lesdites première et seconde entrées, lesdites conduites, lesdits canaux, au moins une partie desdites première et seconde chambres et ladite cage sont formés d'une seule pièce.

L'invention propose ainsi d'intégrer une majeure partie des circuits de lubrification dans la cage du porte-satellites, ce qui permet de réduire le nombre de pièces et simplifie l'assemblage du réducteur. Les risques de fuite d'huile sont ainsi en outre nettement diminués.

Le porte-satellites selon l'invention peut comprendre une ou plusieurs des caractéristiques suivantes, prises isolément les unes des autres, ou en combinaison les unes avec les autres :
- lesdites première et seconde entrées sont orientées radialement par rapport audit axe X et débouchent radialement vers l'extérieur ; ils sont ainsi facilement accessibles en vue de leur raccordement à des moyens d'alimentation en huile,
- lesdites première et seconde entrées sont situées dans un même plan perpendiculaire audit axe X et sont inclinées l'une par rapport à l'autre ; elles sont donc proches l'une de l'autre et peuvent passer à travers un même bras ou des bras différents d'un carter de la turbomachine dans laquelle est intégré le réducteur avec ce porte-satellites,
- lesdites première et seconde chambres sont disposées de manière adjacente, l'une derrière l'autre, le long dudit axe X ; ceci permet d'optimiser la compacité et donc l'encombrement des circuits de lubrification,
- l'une desdites première et seconde chambres est située dans ledit plan et reliée à l'une desdites entrées par un perçage radial et rectiligne, et l'autre desdites première et seconde chambres est située en dehors dudit plan et reliée à l'autre desdites entrées par deux perçages dont un premier perçage situé dans ledit plan et dont un second perçage s'étend de manière inclinée entre le premier perçage et cette autre chambre ; ceci permet également d'optimiser la compacité et donc l'encombrement des circuits de lubrification ; ces perçages, débouchants, sont de préférence bouchés par des bouchons étanches qui peuvent être vissés et / ou collés.
- lesdites conduites sont formées dans l'une desdites parois radiales et s'étendent de manière rectiligne entre ladite première chambre et des noyaux de lubrification des axes des satellites ; les conduits sont ainsi formés dans l'épaisseur des parois radiales, ou dans des surépaisseurs de ces parois,
- lesdits canaux sont formés dans l'une desdites parois radiales ainsi que dans ladite paroi cylindrique et ont chacun une forme générale en L s'étendant entre ladite seconde chambre et des orifices de projection d'huile vers lesdits engrènements ; les canaux sont ainsi formés dans l'épaisseur des parois radiale et cylindrique, ou dans des surépaisseurs de ces parois,
- lesdites première et seconde chambres sont situées à la périphérie interne de l'une desdites parois radiales, et sont délimitées en partie par cette paroi radiale et en partie par un distributeur annulaire rapporté comportant une paroi cylindrique délimitant intérieurement lesdites chambres et au moins une cloison annulaire fermant axialement l'une desdites chambres,
- l'une desdites chambres est reliée à au moins un gicleur d'huile sur vers ledit solaire, ledit gicleur étant intégré audit distributeur ; le gicleur est de préférence configuré pour projeter de l'huile vers l'accouplement entre le solaire et son arbre d'entrainement,
- ledit second circuit comprend en outre des canaux d'amenée d'huile jusqu'aux engrènements des dentures des satellites avec le solaire, et
- lesdites première et seconde chambres ont chacune en section une forme générale parallélépipédique.

Selon un second aspect, l'invention concerne un porte-satellites pour un réducteur mécanique de turbomachine, en particulier d'aéronef, ce porte-satellites comportant une cage définissant un logement interne destiné à recevoir un solaire central d'axe X de rotation, et une rangée annulaire de satellites disposés autour du solaire, cette cage comportant deux parois annulaires radiales par rapport audit axe X et reliées ensemble à leur périphérie externe par une paroi cylindrique d'axe X, au moins une des parois radiales comportant des orifices de montage d'axes desdits satellites, et la paroi cylindrique comportant des lumières de passage de dentures des satellites pour leur engrènement avec une denture d'une couronne destinée à s'étendre autour des satellites et de la cage, caractérisé en ce qu'il comprend en outre un distributeur annulaire d'huile de lubrification qui est formé d'une seule pièce et qui est configuré pour être rapporté et fixé à la périphérie interne de l'une desdites parois radiales de façon à définir avec cette paroi radiale deux chambres annulaires indépendantes et fermées de circulation d'huile.

La réalisation des chambres d'huile est ainsi simplifiée car elles sont délimitées entre la cage, d'une part, et par le distributeur rapporté, d'autre part. Il est en effet plus simple et plus économique de fabriquer de fonderie le distributeur ou d'usiner une pièce pour fabriquer le distributeur, plutôt que de réaliser les chambres entièrement in situ sur la cage. Le distributeur a une forme générale simple et est formé d'une seule pièce, ce qui facilite son montage sur la cage.

Le porte-satellites selon l'invention peut comprendre une ou plusieurs des caractéristiques suivantes, prises isolément les unes des autres, ou en combinaison les unes avec les autres :
- ledit distributeur comprend une paroi cylindrique délimitant intérieurement lesdites chambres et au moins une cloison annulaire fermant axialement l'une desdites chambres ; le distributeur de forme simple peut donc être peu coûteux à réaliser,
- ledit distributeur comprend deux cloisons annulaires s'étendant radialement vers l'extérieur depuis ladite paroi cylindrique et délimitant entre elles l'une desdites chambres, l'autre desdites chambres étant délimitée entre l'une de ces cloisons et une surface annulaire en regard de la paroi radiale sur laquelle est rapporté le distributeur,
- la ou chaque cloison comprend à sa périphérie externe une surface cylindrique externe de centrage sur laquelle est formée une rainure annulaire de réception d'un joint annulaire d'étanchéité destiné à coopérer avec la périphérie interne de la paroi radiale sur laquelle est rapporté le distributeur ; les surfaces cylindriques ont donc une double fonction de centrage mais aussi d'étanchéité du fait qu'elles sont équipées de joints assurant l'étanchéité des chambres et donc des circuits de lubrification,
- ladite paroi cylindrique comprend une surface cylindrique de centrage sur laquelle est formée une rainure annulaire de réception d'un joint annulaire d'étanchéité destiné à coopérer avec la périphérie interne de la paroi radiale sur laquelle est rapporté le distributeur ; cette surface cylindrique a également une double fonction de centrage et d'étanchéité,
- lesdites première et seconde chambres sont disposées de manière adjacente, l'une derrière l'autre, le long dudit axe X,
- lesdites première et seconde chambres ont chacune en section une forme générale parallélépipédique,
- le distributeur comprend une bride ou des pattes de fixation sur ladite cage, par l'intermédiaire de vis,
- une surface cylindrique interne de la périphérie interne de ladite paroi radiale sur laquelle est rapporté le distributeur, comprend une nervure annulaire en saillie et configuré pour coopérer avec ledit joint annulaire d'étanchéité,
- un gicleur d'huile est relié à l'une desdites chambres, et
- le gicleur d'huile est intégré au distributeur, de préférence sur ladite paroi cylindrique.

La présente invention concerne également un réducteur pour une turbomachine, en particulier d'aéronef, comportant un solaire monté solidaire en rotation sur un arbre de puissance autour d'un axe X de rotation, une couronne annulaire coaxial à l'axe X et une pluralité de satellites disposés autour de l'axe X, lesdits satellites étant engrenés avec le solaire et la couronne annulaire qui s'étend autour des satellites ; lesdits satellites sont montés mobiles sur un porte satellites selon l'une des particularités de l'invention.

L'arbre de puissance peut être un arbre basse pression de la turbomachine.

La présente invention concerne également une turbomachine d'aéronef, caractérisée en ce qu'elle comprend un réducteur mécanique comportant un porte-satellites tel que décrit ci-dessus.

Les caractéristiques des différents aspects de l'invention peuvent être combinées les unes avec les autres.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une vue schématique en coupe axiale d'une turbomachine utilisant l'invention,
[Fig. 2] la figure 2 est une section axiale en vue partielle d'un réducteur mécanique,
[Fig. 3] la figure 3 est une vue schématique en perspective d'un réducteur mécanique selon l'invention,
[Fig. 4] la figure 4 est une vue schématique en coupe axiale du réducteur de la figure 3,
[Fig. 5] la figure 5 est une vue schématique partielle en perspective d'un distributeur annulaire d'huile de lubrification,
[Fig. 6] la figure 6 est une vue schématique en perspective des volumes des circuits d'huile de lubrification du réducteur de la figure 3,
[Fig. 7a] la figure 7a est une vue schématique en coupe axiale du réducteur de la figure 3, la coupe étant réalisée dans un plan,
[Fig. 7b] la figure 7b est une autre vue schématique en coupe axiale du réducteur de la figure 3, la coupe étant réalisée dans un plan différent, et
[Fig. 7c] la figure 7c est une autre vue schématique en coupe axiale du réducteur de la figure 3, la coupe étant réalisée dans un plan différent.

### Description détaillée de l'invention

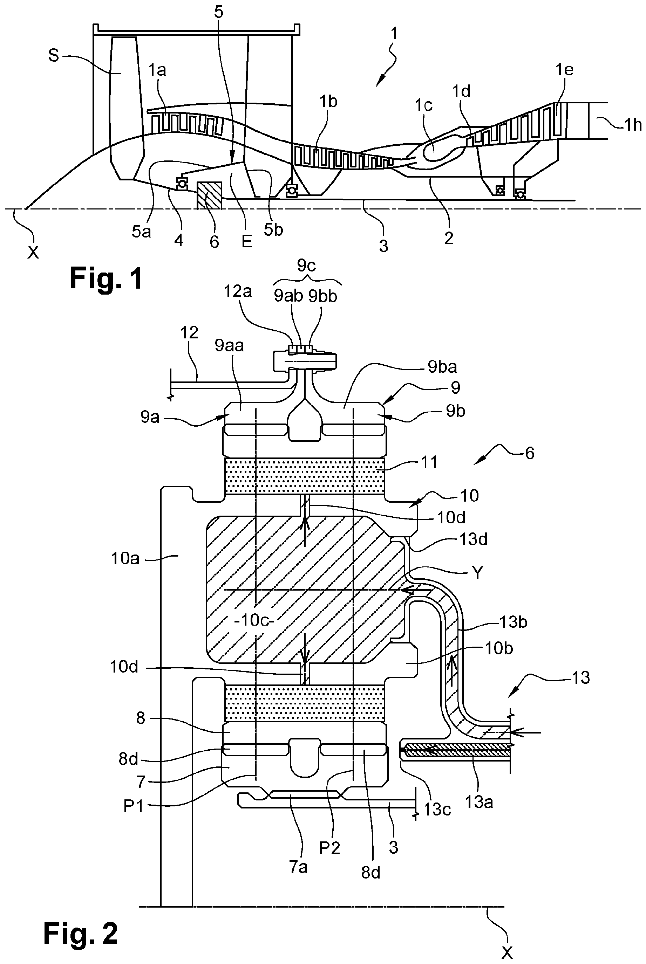

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur 6 est généralement de type planétaire ou épicycloïdal.

Bien que la description qui suit concerne un réducteur du type planétaire ou épicycloïdal, elle s'applique également à un différentiel mécanique dans lequel les trois composants, que sont le porte-satellites, la couronne et le solaire, sont mobiles en rotation, la vitesse de rotation de l'un de ces composants dépendant notamment de la différence de vitesses des deux autres composants.

Le réducteur 6 est positionné dans la partie avant de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

La figure 2 montre un réducteur 6 qui peut prendre la forme de différentes architectures selon si certaines pièces sont fixes ou en rotation. En entrée, le réducteur 6 est relié à l'arbre BP 3, par exemple par l'intermédiaire de cannelures internes 7a. Ainsi l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenus par un châssis appelé porte-satellites 10. Chaque satellite 8 tourne autour de son propre axe Y, et engrène avec la couronne 9.

En sortie, nous avons :
- dans une configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
- dans une configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange les axes 10b et le châssis 10a peuvent être séparés en plusieurs pièces.

Pour les mêmes raisons citées précédemment, la denture d'un réducteur peut être séparée en plusieurs hélices présentant chacun un plan médian P. Dans notre exemple, nous détaillons le fonctionnement d'un réducteur à plusieurs hélices avec une couronne séparée en deux demi-couronnes:
- une demi-couronne avant 9a constituée d'une jante 9aa et d'une demi-bride de fixation 9ab. Sur la jante 9aa se trouve l'hélice avant de la denture du réducteur. Cette hélice avant engrène avec celle du satellite 8 qui engrène avec celle du solaire 7.
- une demi-couronne arrière 9b constituée d'une jante 9ba et d'une demi-bride de fixation 9bb. Sur la jante 9ba se trouve l'hélice arrière de la denture du réducteur. Cette hélice arrière engrène avec celle du satellite 8 qui engrène avec celle du solaire 7.

Dans le cas de dentures chevrons, si les largeurs d'hélice varient entre le solaire 7, les satellites 8 et la couronne 9 à cause des recouvrements de denture, elles sont toutes centrées sur un plan médian P1 pour les hélices avant et sur un autre plan médian P2 pour les hélices arrière. Dans les autres figures, dans le cas d'un roulement à deux rangées de rouleaux.

La demi-bride de fixation 9ab de la demi-couronne avant 9a et la demi-bride de fixation 9bb de la demi-couronne arrière 9b forment la bride de fixation 9c de la couronne. La couronne 9 est fixée au porte-couronne 12 en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur 13 est séparé en deux parties en général chacune répétée du même nombre de satellites. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe 10b dans une ou des zones tampons 10c pour ensuite ressortir par les orifices 10d afin de lubrifier les paliers 11 des satellites 8.

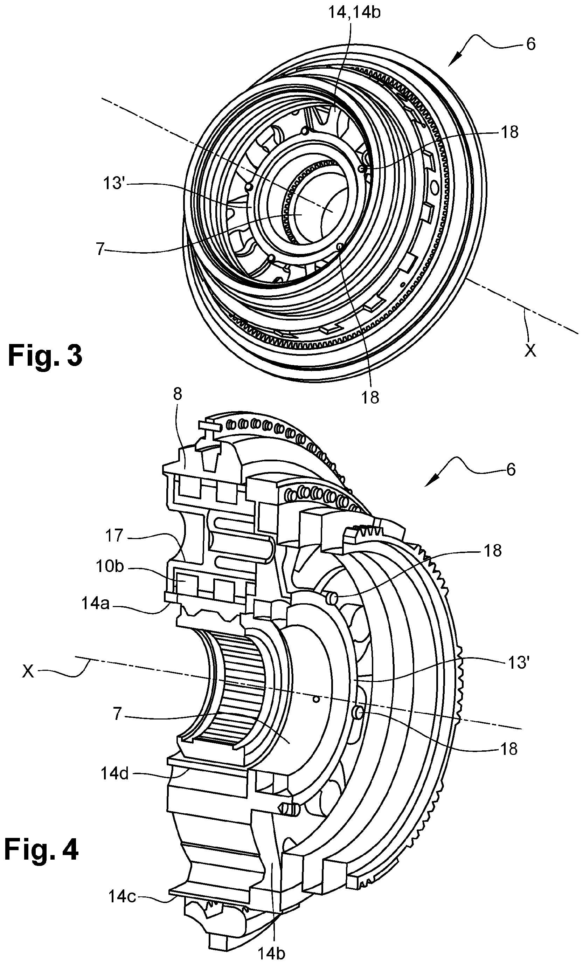

Les figures 3 à 7 représentent un mode de réalisation d'un réducteur 6 comportant plusieurs aspects de l'invention.

L'un de ces aspects concerne le distributeur 13' d'huile de lubrification et un autre concerne les circuits 15a, 15b d'huile de lubrification du réducteur 6.

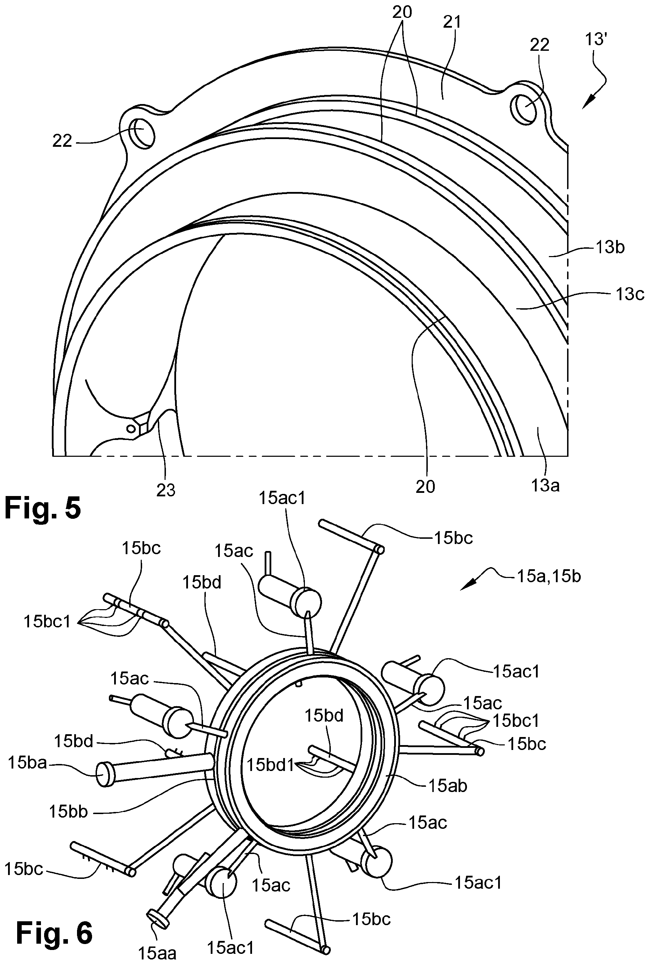

Le réducteur 6 des figures 5 et suivantes est similaire à ceux décrits dans ce qui précède et comprend un porte-satellites 10 à cage 14.

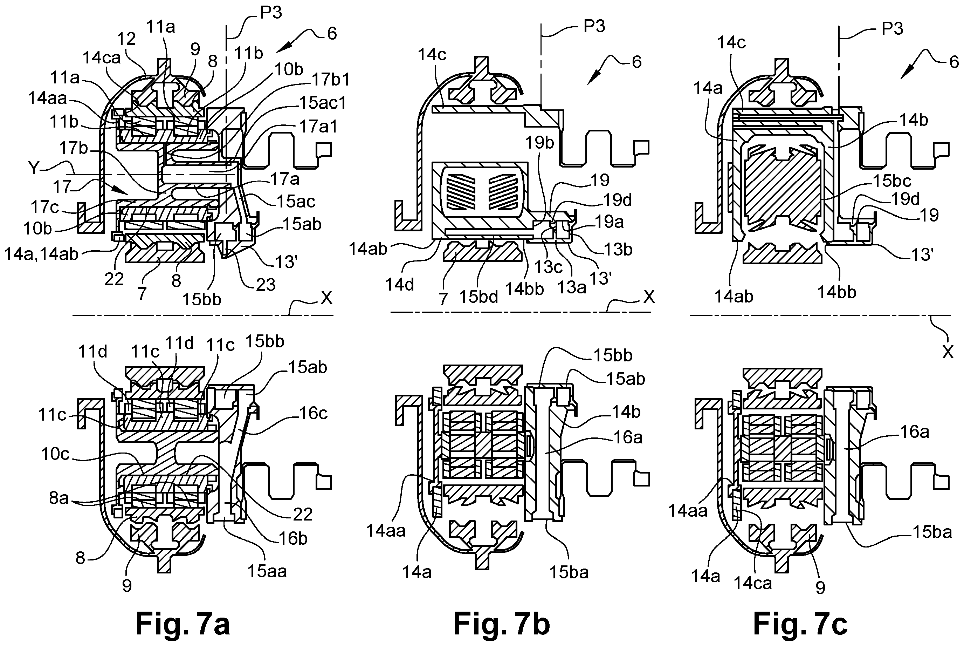

La cage 14 comprend deux parois annulaires radiales 14a, 14b s'étendant autour de l'axe X, ces parois 14a, 14b étant parallèles et étant respectivement une paroi radiale avant 14a et une paroi radiale arrière 14b. Les parois 14a, 14b sont reliées entre elles à leurs périphéries externes par une paroi cylindrique 14c. Les parois 14a, 14b et 14c sont mieux visibles aux figures 7a à 7c.

La cage 14 définit un logement interne destiné à recevoir le solaire central 7 d'axe X de rotation, et la rangée annulaire de satellites 8 disposés autour du solaire 7.

Au moins une des parois radiales 14a, 14b (il s'agit de la paroi avant 14a dans l'exemple représenté aux figures 7a à 7c) comporte des orifices 14aa de montage des axes 10b des satellites 8, et la paroi cylindrique 14c comporte des lumières 14ca de passage des dentures des satellites 8 pour leur engrènement avec la denture de la couronne 9 destinée à s'étendre autour des satellites 8 et de la cage 14.

Les orifices 14aa sont régulièrement répartis autour de l'axe X. Les parois 14a, 14b comportent en outre chacune un orifice central 14ab, 14ba aligné sur l'axe X. Les parois 14a, 14b peuvent être reliées en outre entre elles par une autre paroi cylindrique 14d s'étendant sur la périphérie interne des parois 14a, 14b, autour de leurs orifices 14ab, 14ba. Cette paroi 14d est visible à la figure 7b.

Le réducteur 6 comprend deux circuits 15a, 15b de lubrification qui sont indépendants, les volumes d'huile de ces circuits étant visibles à la figure 6. Le premier circuit 15a comporte une première entrée 15aa dédiée d'huile reliée par une première chambre annulaire 15ab d'huile s'étendant autour de l'axe X à des conduites 15ac d'amenée d'huile jusqu'aux axes 10b des satellites 8.

Le second circuit 15b comporte une seconde entrée 15ba dédiée d'huile reliée par une seconde chambre annulaire 15bb d'huile s'étendant autour de l'axe X à des canaux 15bc d'amenée d'huile jusqu'aux engrènements des dentures des satellites 8 avec la couronne 9. Le second circuit 15b peut en outre comprendre des canaux 15bd d'amenée d'huile jusqu'aux engrènements des dentures des satellites 8 avec le solaire 7.

Comme on le voit dans les dessins, les entrées 15aa, 15ba, les conduites 15ac, les canaux 15bc, 15bd, et au moins une partie des chambres 15ab, 15bb sont intégrés dans la cage 14, c'est-à-dire qu'ils ne sont pas formés par ou dans des pièces rapportées sur la cage mais font partie intégrantes de la cage.

Les entrées 15aa, 15ba sont orientées radialement par rapport à l'axe X et débouchent radialement vers l'extérieur en vue de leur raccordement à des moyens d'alimentation en huile. Ces entrées 15aa, 15ba sont situées dans un même plan P3 perpendiculaire à l'axe X et sont inclinées l'une par rapport à l'autre dans ce plan P3, autour de l'axe X (figures 7a et 7b).

Les chambres 15ab, 15bb sont disposées de manière adjacente, l'une derrière l'autre, le long de l'axe X. Elles ont chacune en section une forme générale parallélépipédique dans l'exemple représenté. L'une de ces chambres, à savoir la chambre avant 15bb dans l'exemple représenté, est située dans le plan P3 précité et est reliée à l'entrée 15ba par un perçage 16a radial et rectiligne formé dans la paroi radiale arrière 14b (figures 7b et 7c). L'autre chambre 15ab est située en dehors du plan P3 (ici en arrière de ce plan) et est reliée à l'autre entrée 15aa par deux perçages dont un premier perçage 16b situé dans le plan P3 et dont un second perçage 16c s'étend de manière inclinée entre le premier perçage 16b et la chambre 15ab (figure 7a).

Les conduites 15ac sont formées dans la paroi radiale arrière 14b et s'étendent de manière rectiligne et légèrement inclinée entre la chambre 15ab et des noyaux 17 d'alimentation en huile des satellites 8 (figure 7a).

Les canaux 15bc sont formés dans la paroi radiale arrière 14b ainsi que dans la paroi cylindrique 14c (figure 7c). Ils ont chacun une forme générale en L et comprennent chacun une branche rectiligne et radiale s'étendant dans la paroi 14b, depuis la chambre 15bb, et une branche rectiligne axiale s'étendant dans la paroi 14c, jusqu'à des orifices 15bc1 de projection d'huile vers les engrènements des dentures des satellites 8 et de la couronne 9 (figures 7c et 6).

Les canaux 15bd sont formés dans la paroi 14d et s'étendent depuis la chambre 15bb jusqu'à des orifices 15bd1 de projection d'huile vers les engrènements des dentures des satellites 8 avec le solaire 7 (figures 6 et 7b).

Les chambres 15ab, 15bb sont situées à la périphérie interne de la paroi 14b, et sont délimitées en partie par cette paroi radiale et en partie par le distributeur 13' qui est rapporté sur cette paroi et fixée sur celle-ci par des vis 18 (figures 3 et 4).

La périphérie interne de la paroi 14b comprend un rebord cylindrique 19 orienté vers l'arrière et comportant une surface cylindrique interne 19a sur laquelle débouchent les extrémités radialement internes des perçages 16a, 16c, des conduits 15ac et des canaux 15bc (figures 7a à 7c). Une surface radiale arrière 19b de la paroi 14b s'étend entre l'orifice central 14bb de la paroi 14b et la surface 19a. Les canaux 15bd découchent axialement vers l'aval sur la surface 19b (figure 7b).

Le distributeur 13' a une forme générale annulaire et est formé d'une seule pièce. Il comporte une paroi cylindrique 13a délimitant intérieurement les chambres 15ab, 15bb, les chambres étant destinées à être délimitées extérieurement par la surface 19a de la paroi 14b lorsque le distributeur 13' est monté co-axialement sur la paroi 14b en l'engageant à l'intérieur du rebord et de l'orifice 14bb de la paroi 14b.

Le distributeur 13' comprend deux cloisons annulaires 13b, 13c sensiblement radiales dans l'exemple représenté. Une des cloisons 13c s'étend radialement vers l'extérieur depuis l'extrémité arrière de la paroi 13a et est en appui radial étanche sur la surface 19a, ici à l'extrémité arrière du rebord 19.

La paroi cylindrique 13a du distributeur 13' a son extrémité avant qui est en appui radial étanche sur le bord périphérique de l'orifice 14bb. La cloison 13b s'étend radialement vers l'extérieur, à distance de l'extrémité amont de la paroi 13a et de la cloison 13b, et est également en appui radial étanche sur la surface 19a.

Chaque appui étanche est obtenu dans l'exemple représenté par un joint torique qui est disposé dans une rainure annulaire 20 de la périphérie externe de la cloison 13b, 13c, ou de l'extrémité avant de la paroi 13a, et qui est coopère par appui et déformation élastique avec la paroi radiale 14b ou son rebord 19.

Pour faciliter le centrage du distributeur 13' et la réalisation des rainures 20 sur les cloisons 13b, 13c, ces dernières peuvent être surdimensionnées à leurs périphéries externes et comprendre chacune une surface cylindrique de centrage sur laquelle est formée la rainure 20 de réception d'un joint. Par ailleurs, pour faciliter le montage du distributeur 13' par translation axiale dans l'orifice 14bb et le rebord 19, le joint porté par la cloison 13b peut coopérer avec une nervure annulaire 19d en saillie sur la surface 19a, comme cela est visible aux figures 7b et 7c.

On comprend que la chambre 15bb est fermée par le distributeur 13' et délimitée entre une portion annulaire avant de la surface 19a, la surface 19b, une portion annulaire avant de la paroi 13a et la cloison 13c. La chambre 15ab est fermée par le distributeur 13' et délimitée entre une portion annulaire arrière de la surface 19a, une portion annulaire arrière de la paroi 13a et les cloisons 13b, 13c.

Les chambres 15ab, 15bb sont ainsi indépendantes dans la mesure où elles ne communiquent pas entre elles.

Le distributeur 13', et en particulier sa cloison 13b, comprend une bride annulaire 21 s'étendant radialement vers l'extérieur et comportant des orifices 22 de passage des vis 18 qui sont vissées dans des orifices taraudés de la paroi 14b de la cage.

Le distributeur 13' comprend en outre, en saillie, sur la surface cylindrique interne de sa paroi 13a, un gicleur 23 d'huile qui est relié à la chambre avant 15bb (figures 5 et 7a). Ce gicleur 23 est configuré pour projeter de l'huile sur l'accouplement entre le solaire 7 et l'arbre basse pression 3 de la figure 2.

Le gicleur 23 est avantageusement également intégré au distributeur 13', comme c'est le cas dans l'exemple représenté.

Les circuits d'huile 15a, 15b sont avantageusement configurés pour être raccordés fluidiquement, au niveau de leurs entrées et de leurs éventuelles sorties, par des emmanchements du type mâle-femelle, c'est-à-dire par des raccords nécessitant seulement un emboîtement par translation axiale d'un raccord mâle dans un raccord femelle. Même si un raccord est présenté dans ce qui suit comme mâle et destiné à coopérer avec un raccord femelle, il peut en variante être remplacé par un raccord femelle destiné donc à coopérer avec un raccord mâle, et inversement. L'étanchéité des raccords mâle-femelle peut être assurée par des joints toriques ou analogues.

En ce qui concerne les entrées 15aa, 15ba, elles comprennent chacune un raccord femelle dans l'exemple représenté qui est destiné à recevoir le raccord mâle d'un tuyau d'alimentation en huile (figures 6 à 7c).

En ce qui concerne les sorties d'huile et en dehors des orifices 15bc1, 15bd1 de projection d'huile, elles sont situées aux extrémités radialement externes des conduits 15ac (figures 6 et 7a).

Comme cela est visible à la figure 7a, les sorties des conduits 15ac comprennent chacune un raccord femelle 15ac1 dans l'exemple représenté, qui est destiné à recevoir le raccord mâle d'un des noyaux 17. Ces raccords 15ac1 sont orientés axialement, toutes dans la même direction ici vers l'avant.

Les noyaux 17 ont pour fonction de lubrifier et de refroidir les axes 10b des satellites 8.

Dans l'exemple de réalisation représenté, chaque axe 10b est guidé par un palier 11 à double roulement, c'est-à-dire à double rangée de rouleaux 11a. Les deux rangées s'étendent autour d'un même axe qui est confondu avec celui, noté Y, de l'axe 10b du satellite 8. L'application pourrait comporter plus de deux rangées.

Classiquement, les rouleaux sont guidés dans des pistes définies par des bagues internes et externes. Une particularité est ici liée au fait que les bagues internes de guidage des rouleaux 11a sont intégrées à l'axe 10b. La périphérie externe de l'axe 10b comprend ainsi des pistes cylindriques 11b de roulement des rouleaux 11a, chaque piste 11b étant délimitée axialement par des nervures annulaires 11c qui servent elles au guidage de cages 11d de maintien des rouleaux 11a. Par ailleurs, les figures 7a à 7c permettent de voir que les bagues externes sont intégrées à la périphérie interne des satellites 8. La périphérie interne des satellites 8 comprend ainsi des pistes cylindriques 8a de roulement des rouleaux 11a.

La périphérie interne de l'axe 10b comprend une surface cylindrique interne 10e qui est destinée à être recouverte par le noyau 17.

Ce noyau 17 comprend essentiellement trois parties à savoir une portion cylindrique 17a, un disque 17b et une bague 17c. Le noyau 17 est ici formé d'une seule pièce bien que cette caractéristique ne soit pas limitative.

La portion 17a s'étend le long de l'axe Y et comprend une conduite interne, appelée première conduite 17a1, qui s'étend le long de l'axe Y sur la quasitotalité de la longueur de la portion 17a dans l'exemple représenté.

La portion 17a a une extrémité axiale (arrière) formant le raccord mâle précité, et une extrémité opposée (avant) reliée au centre du disque 17b dont la périphérie externe est reliée à la bague 17c. Le disque 17b s'étend dans un plan sensiblement perpendiculaire à l'axe Y et comprend une conduite interne, appelée seconde conduite 17b1, qui s'étend radialement depuis la première conduite 17a1 jusqu'à la surface annulaire externe du disque 17b.

Le disque 17b est relié sensiblement au milieu de la bague 17c (le long de l'axe Y) si bien que la seconde conduite débouche sensiblement au milieu de la bague 17c. Le disque 17b pourrait comprendre plusieurs secondes conduites radiales 17b1 régulièrement espacées autour de l'axe Y.

La bague 17c s'étend autour de l'axe Y et délimite avec la surface cylindrique interne de l'axe 10b une cavité annulaire 22 de circulation d'huile et d'alimentation des orifices 10d d'acheminement de l'huile jusqu'au palier 11 et aux cages 11d, ces orifices étant visibles à la figure 2.

En fonctionnement, l'huile parvient aux chambres 15ab, 15bb par les entrées 15aa, 15ba et les perçages 16a, 16b et 16c. L'huile dans la chambre 15ab alimente les noyaux 17 par les conduits 15ac en vue de la lubrification du palier 11. L'huile dans la chambre 15bb alimente les canaux 15bc, 15bd en vue de la lubrification des engrènements. De l'huile est en outre projetée par le gicleur 23 sur l'accouplement entre le solaire 7 et l'arbre BP 3.

## Revendications

1. Porte-satellites (10) pour un réducteur mécanique (6) de turbomachine, en particulier d'aéronef, ce porte-satellites comportant une cage (14) définissant un logement interne destiné à recevoir un solaire central (7) d'axe X de rotation, et une rangée annulaire de satellites (8) disposés autour du solaire, cette cage comportant deux parois annulaires radiales (14a, 14b) par rapport audit axe X et reliées ensemble à leur périphérie externe par une paroi cylindrique (14c) d'axe X, au moins une des parois radiales comportant des orifices (14aa) de montage d'axes (10b) desdits satellites, et la paroi cylindrique comportant des lumières (14ca) de passage de dentures des satellites pour leur engrènement avec une denture d'une couronne (9) destinée à s'étendre autour des satellites et de la cage, **caractérisé en ce qu'**il comprend des premier et second circuits de lubrification (15a, 15b) indépendants, le premier circuit (15a) comportant une première entrée (15aa) dédiée d'huile reliée par une première chambre annulaire d'huile (15ab) s'étendant autour de l'axe X à des conduites (15ac) d'amenée d'huile jusqu'auxdits axes des satellites, et le second circuit (15b) comportant une seconde entrée (15ba) dédiée d'huile reliée par une seconde chambre annulaire d'huile (15bb) s'étendant autour de l'axe X à des canaux (15bc) d'amenée d'huile jusqu'aux engrènements des dentures des satellites avec la couronne, et **en ce que** lesdites première et seconde entrées, lesdites conduites, lesdits canaux, au moins une partie desdites première et seconde chambres et ladite cage sont formés d'une seule pièce.

2. Porte-satellites (10) selon la revendication 1, dans lequel lesdites première et seconde entrées (15aa, 15ba) sont orientées radialement par rapport audit axe X et débouchent radialement vers l'extérieur.

3. Porte-satellites (10) selon la revendication 2, dans lequel lesdites première et seconde entrées (15aa, 15ba) sont situées dans un même plan (P3) perpendiculaire audit axe X et sont inclinées l'une par rapport à l'autre.

4. Porte-satellites (10) selon l'une des revendications précédentes, dans lequel lesdites première et seconde chambres (15ab, 15bb) sont disposées de manière adjacente, l'une derrière l'autre, le long dudit axe X.

5. Porte-satellites (10) selon l'ensemble des revendications 3 et 4, dans lequel l'une desdites première et seconde chambres (15bb) est située dans ledit plan (P3) et reliée à l'une desdites entrées (15ba) par un perçage (16a) radial et rectiligne, et l'autre desdites première et seconde chambres (15aa) est située en dehors dudit plan et reliée à l'autre desdites entrées (15aa) par deux perçages (16b, 16c) dont un premier perçage situé dans ledit plan et dont un second perçage s'étend de manière inclinée entre le premier perçage et cette autre chambre.

6. Porte-satellites (10) selon l'une des revendications précédentes, dans lequel lesdites conduites (15ac) sont formées dans l'une desdites parois radiales (14b) et s'étendent de manière rectiligne entre ladite première chambre (15ab) et des noyaux (17) de lubrification desdits axes (10b) des satellites.

7. Porte-satellites (10) selon l'une des revendications précédentes, dans lequel lesdits canaux (15bc) sont formés dans l'une desdites parois radiales (14b) ainsi que dans ladite paroi cylindrique (14c) et ont chacun une forme générale en L s'étendant entre ladite seconde chambre (15bb) et des orifices (15bc1) de projection d'huile vers lesdits engrènements.

8. Porte-satellites (10) selon l'une des revendications précédentes, dans lequel lesdites première et seconde chambres (15ab, 15bb) sont situées à la périphérie interne de l'une desdites parois radiales (14b), et sont délimitées en partie par cette paroi radiale et en partie par un distributeur annulaire (13') rapporté comportant une paroi cylindrique (13a) délimitant intérieurement lesdites chambres et au moins une cloison annulaire (13b, 13c) fermant axialement l'une desdites chambres (15ab, 15bb).

9. Porte-satellites (10) selon la revendication 8, dans lequel l'une desdites chambres (15bb) est reliée à au moins un gicleur d'huile (23) vers ledit solaire, ledit gicleur étant également intégré audit distributeur (13').

10. Porte-satellites (10) selon l'une des revendications précédentes, dans lequel lesdites première (15ab) et seconde (15bb) chambres ont chacune en section une forme générale parallélépipédique.

11. Porte-satellites (10) selon l'une des revendications précédentes, dans lequel ledit second circuit (15b) comprend en outre des canaux (15bd) d'amenée d'huile jusqu'aux engrènements des dentures des satellites (8) avec le solaire (7).

12. Réducteur (6) pour une turbomachine (1), en particulier d'aéronef, comportant un solaire (7) monté solidaire en rotation sur un arbre de puissance (3) autour d'un axe X de rotation, une couronne annulaire (9) coaxial à l'axe X et une pluralité de satellites (8) disposés autour de l'axe X, lesdits satellites (8) étant engrenés avec le solaire (7) et la couronne annulaire (9) qui s'étend autour des satellites (8), **caractérisé en ce que** le réducteur comporte un porte satellite (10) selon l'une des revendications 1 à 11 et que lesdits satellites (8) sont montés mobiles sur ledit porte satellites (10).

13. Turbomachine d'aéronef, **caractérisée en ce qu'**elle comprend un réducteur mécanique (6) selon la revendication 12.

## Patentansprüche

1. Satellitenträger (10) für ein mechanisches Untersetzungsgetriebe (6) einer Turbomaschine, insbesondere eines Luftfahrzeugs, wobei dieser Satellitenträger ein Gehäuse (14), das eine interne Aufnahme definiert, die dazu bestimmt ist, ein zentrales Sonnenrad (7) mit einer Rotationsachse X aufzunehmen, und eine ringförmige Anordnung von Satelliten (8) umfasst, die um das Sonnenrad herum angebracht sind, wobei dieses Gehäuse in Bezug auf die Achse X zwei radiale, ringförmige und an ihrem externen Umfang durch eine zylindrische Wand (14c) mit der Achse X zusammen verbundene Wände (14a, 14b) umfasst, wobei mindestens eine der radialen Wände Löcher (14aa) zur Montage von Achsen (10b) der Satelliten umfasst, und die zylindrische Wand Öffnungen (14ca) zum Durchgang von Verzahnungen der Satelliten für deren Eingriff mit einer Verzahnung eines Hohlrads (9) umfasst, das dazu bestimmt ist, sich um die Satelliten des Gehäuses herum zu erstrecken, **dadurch gekennzeichnet, dass** es ein erstes und zweites unabhängiges Schmiersystem (15a, 15b) umfasst, wobei das erste System (15a) einen ersten für Öl dedizierten Eingang (15aa), verbunden durch eine erste ringförmige Ölkammer (15ab), umfasst, die sich um die Achse X herum erstreckt, zu Ölzufuhrleitungen (15ac) bis zu den Satellitenachsen, und das zweite System (14b) einen zweiten für Öl dedizierten Eingang (15ba), verbunden durch eine zweite ringförmige Ölkammer (15bb), umfasst, die sich um die Achse X herum erstreckt, zu Ölzufuhrkanäle (15bc) bis zu den Eingriffen der Verzahnungen der Satelliten mit dem Hohlrad, und dadurch, dass der erste und zweite Eingang, die Leitungen, die Kanäle, mindestens ein Teil der ersten und zweiten Kammer und das Gehäuse aus einem einzigen Stück gebildet sind.

2. Satellitenträger (10) nach Anspruch 1, wobei der erste und zweite Eingang (15aa, 15ba) in Bezug auf die Achse X radial ausgerichtet sind und in Richtung der Außenseite radial münden.

3. Satellitenträger (10) nach Anspruch 2, wobei der erste und zweite Eingang (15aa, 15ba) sich in einer gleichen Ebene (P3) befinden, die zur Achse X senkrecht ist, und in Bezug zueinander geneigt sind.

4. Satellitenträger (10) nach einem der vorstehenden Ansprüche, wobei die erste und zweite Kammer (15ab, 15bb) auf angrenzende Weise, eine hinter der anderen, entlang der Achse X angeordnet sind.

5. Satellitenträger (10) nach einem der Ansprüche 3 und 4, wobei eine der ersten und zweiten Kammer (15bb) sich in der Ebene (P3) befindet und mit einem der Eingänge (15ba) durch eine radiale und geradlinige Bohrung (16a) verbunden ist, und die andere der ersten und zweiten Kammer (15aa) sich außerhalb der Ebene befindet und mit dem anderen der Eingänge (15aa) durch zwei Bohrungen (16b, 16c) verbunden ist, von denen eine erste Bohrung sich in der Ebene befindet und von denen eine zweite Bohrung sich auf geneigte Weise zwischen der ersten Bohrung und dieser anderen Kammer erstreckt.

6. Satellitenträger (10) nach einem der vorstehenden Ansprüche, wobei die Leitungen (15ac) in einer der radialen Wände (14b) gebildet sind und sich zwischen der ersten Kammer (15ab) und Schmierkernen (17) der Achsen (10b) der Satelliten auf geradlinige Weise erstrecken.

7. Satellitenträger (10) nach einem der vorstehenden Ansprüche, wobei die Kanäle (15bc) in einer der radialen Wände (14b) sowie in der zylindrischen Wand (14c) gebildet sind und jeweils eine allgemein L-förmige Gestalt aufweisen, die sich zwischen der zweiten Kammer (15bb) und Löchern (15bc1) zur Projektion von Öl in Richtungen der Eingriffe erstreckt.

8. Satellitenträger (10) nach einem der vorstehenden Ansprüche, wobei die erste und zweite Kammer (15ab, 15bb) sich an dem Innenumfang einer der radialen Wände (14b) befinden und zum Teil durch diese radiale Wand und zum Teil durch einen angebrachten ringförmigen Verteiler (13'), der eine zylindrische Wand (13a), der die Kammern im Inneren begrenzt, und mindestens eine ringförmige Trennwand (13b, 13c) umfasst, die eine der Kammern (15ab, 15bb) axial verschließt, begrenzt sind.

9. Satellitenträger (10) nach Anspruch 8, wobei eine der Kammern (15bb) mit mindestens einer Öldüse (23) in Richtung des Sonnenrads verbunden ist, wobei die Düse gleichfalls mit dem Verteiler (13') integriert ist.

10. Satellitenträger (10) nach einem der vorstehenden Ansprüche, wobei die erste (15ab) und zweite (15bb) Kammer jeweils einen Abschnitt in allgemein parallelepipedischer Gestalt aufweisen.

11. Satellitenträger (10) nach einem der vorstehenden Ansprüche, wobei das zweite System (15b) des Weiteren Ölzufuhrkanäle (15bd) bis zu den Eingriffen der Verzahnungen der Satelliten (8) mit dem Sonnenrad (7) umfasst.

12. Untersetzungsgetriebe (6) für ein Turbotriebwerk, insbesondere eines Luftfahrzeugs, umfassend ein Sonnenrad (7), das auf einer Leistungswelle (3) drehfest um eine Rotationsachse X herum montiert ist, ein zu der Achse X koaxiales ringförmiges Hohlrad (9) und eine Vielzahl von um die Achse X herum angeordneten Satelliten (8), wobei die Satelliten (8) mit dem Sonnenrad (7) und dem ringförmigen Hohlrad (9), das sich um die Satelliten (8) herum erstreckt, in Eingriff vorliegen, **dadurch gekennzeichnet, dass** das Untersetzungsgetriebe einen Satellitenträger (10) nach einem der Ansprüche 1 bis 11 umfasst, und dadurch, dass die Satelliten (8) auf dem Satellitenträger (10) beweglich montiert sind.

13. Turbomaschine eines Luftfahrzeugs, **dadurch gekennzeichnet, dass** es ein mechanisches Untersetzungsgetriebe (6) nach Anspruch 12 umfasst.

## Claims

1. Planet-carrier (10) for a mechanical reduction gear (6) of a turbine engine, in particular of an aircraft, said planet-carrier comprising a cage (14) defining an internal housing intended to receive a central sun gear (7) with an axis of rotation X, and an annular row of planet gears (8) arranged around the sun gear, said cage comprising two annular radial walls (14a, 14b) with respect to said axis X, and connected to one another at their outer periphery by a cylindrical wall (14c) of axis X, at least one of these radial walls comprising a mounting orifices (14aa) of the axes (10b) of said planet gears, and the cylindrical wall comprising through-holes (14ca) of the passage of the gearings of the planet gears so that they may engage with a gearing of the ring gear (9), which is intended to extend around the planet gears and the cage, **characterised in that** it comprises first and second independent lubrication circuits (15a, 15b), the first circuit (15a) comprising a first oil inlet (15aa) connected by a first annular oil chamber (15ab) extending around the axis X to ducts (15ac) supplying oil to said axes of the planet gears, and the second circuit (15b) comprising an second oil inlet (15ba) connected by a second annular oil chamber (15bb) extending around the axis X to channels (15bc) supplying oil to the gearings of the planet gears with the ring gear, and **in that** said cage (14), first (15aa) and second (15ba) inlets, said ducts (15ac), said channels (15bc) and at least a portion of said first (15aa) and second (15bb) chambers are formed of a single part.

2. Planet-carrier (10) according to claim 1, wherein said first and second inlets (15aa, 15ba) are oriented radially with respect to said axis X and open radially outwards.

3. Planet-carrier (10) according to claim 2, wherein said first and second inlets (15aa, 15ba) are located in a same plane (P3) that is perpendicular to said axis X and are at an angle with respect to one another.

4. Planet-carrier (10) according to one of the preceding claims, wherein said first and second chambers (15ab, 15bb) are arranged adjacently, one behind the other, along said axis X.

5. Planet-carrier (10) according to all claims 3 and 4, wherein one of said first and second chambers (15bb) is located in said plane (P3) and connected to one of said inlets (15ba) by a radial and rectilinear drill hole (16a), and the other of said first and second chambers (15aa) is located outside of said plane and connected to the other of said inlets (15aa) by two drill holes (16b, 16c), wherein a first drill hole being located in said plane and a second drill hole extending at an angle between the first drill hole and the other chamber.

6. Planet-carrier (10) according to one of the preceding claims, wherein said ducts (15ac) are formed in one of said radial walls (14b) and extend in a rectilinear manner between said first chamber (15ab) and a lubricating cores (17) of said axes (10b) of the planet gears.

7. Planet-carrier (10) according to one of the preceding claims, wherein said channels (15bc) are formed in one of said radial walls (14b) as well as in said cylindrical wall (14c) and each has a general L shape extending between said second chamber (15bb) and the orifices (15bc1) projecting oil towards said gearings.

8. Planet-carrier (10) according to one of the preceding claims, wherein said first and second chambers (15ab, 15bb) are located on the inner periphery of one of said radial walls (14b), and are partially delimited by this radial wall, and partially by an attached annular distributor (13') comprising a cylindrical wall (13a) delimiting, internally, said chambers and at least an annular partition (13b, 13c) axially closing one of said chambers (15ab, 15bb).

9. Planet-carrier (10) according to claim 8, wherein one of said chambers (15bb) is connected to at least one nozzle (23) spraying oil towards said sun gear, said nozzle also being integrated in said distributor (13').

10. Planet gear (10) according to one of the preceding claims, wherein said first (15ab) and second (15bb) chambers each have in crosssection a general parallelepiped shape.

11. Planet-carrier (10) according to one of the preceding claims, wherein said second circuit (15b) further comprises channels (15bd) supplying oil to the gearings of the planet gears (8) with the sun gear (7).

12. Reduction gear (6) for a turbine engine (1), in particular of an aircraft, comprising a sun gear (7) mounted rotationally secure on a drive shaft (3) around an axis of rotation X, an annular ring gear (9) coaxial with the axis X and a plurality of planet gears (8) arranged around the axis X, said planet gears (8) being engaged with the sun gear (7) and the annular ring gear (9) that extends around the planet gears (8), **characterised in that** said the reduction gear comprises a planet-carrier (10) according to one of claims 1 to 11 and that said planet gears (8) are mounted mobile on the planet-carrier (10).

13. Turbine engine of an aircraft **characterised in that** it comprises a reduction gear (6) according to claim 12.
